# EUROPEAN PATENT APPLICATION

(11) **EP 0 817 361 A2**
(43) Date of publication of application: **07.01.1998**
(21) Application number: 97304427.4
(22) Date of filing: 24.06.1997
(51) Int. Cl.: H02M 7/217

(54) **A load insensitive power supply**

(30) Priority: 24.06.1996 US 668911
(71) Applicant: HARRIS CORPORATION, Melbourne Florida 32919 (US)
(72) Inventor: Cripe, David W., Camp Point, Illinois 62320 (US)
(74) Representative: van Berlyn, Ronald Gilbert

(57) **Abstract**

A load insensitive power supply includes an output circuit normally connected to a load for receiving power from the power supply and an input circuit for connection across an AC power supply source alternately having first and second 180° half-cycles of operation. A transformer is provided having a primary winding connected across the input circuit and including first and second series connected secondary windings having a common junction. A filter choke is connected in series between the junction and the output circuit. A first bi-directional switch serves, when ON, to connect the filter choke and the first secondary winding in a first series circuit with the output circuit, permitting bi-directional current flow therethrough. A second bi-directional switch serves, when ON, to connect the filter choke and the second secondary winding in a second series circuit with the output circuit for bi-directional current flow therethrough.

## Description

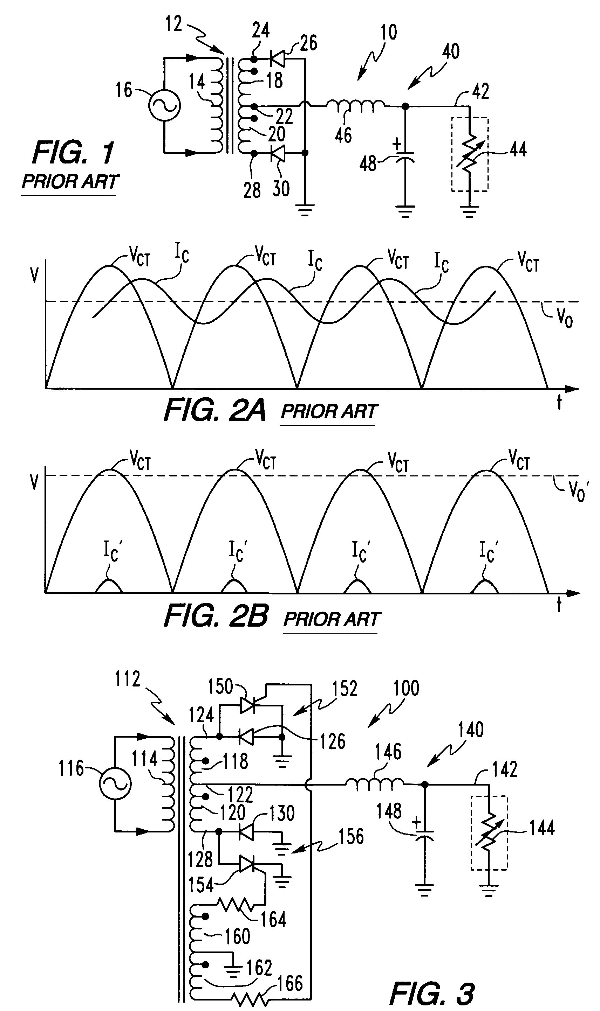

The present invention relates to a load insensitive power supply. Figure 1 illustrates a known power supply. This is a choke-input-filtered rectifier power supply wherein the output voltage is load dependent and when the power supply becomes lightly loaded, its output voltage will rise to a magnitude approximately 40 percent above the nominal loaded output voltage. This unwanted increase in voltage creates additional stress on the electrical components. This unwanted increase in voltage occurs because the AC ripple current in the filter choke is a function of the AC ripple voltage applied to it and is independent of load current. As the current drawn by the load is reduced, a point is reached at which the choke current seeks to flow in the reverse direction. The rectifier components become back-biased, preventing current flow. As the load current approaches zero, the angle of conduction of the rectifiers diminishes from 180° to near 0° and the rectifiers become essentially peak-detecting.

If the angle of conduction of the rectifiers in such a known power supply circuit could be maintained at a 180° regardless of output load current, the output voltage of the power supply could be held roughly constant, thus eliminating the tendency of the power supply voltage to soar in unloaded conditions. In such a situation, the rectifiers must be bi-directionally conducting during the 180° cycle of operation since the filter choke has no net DC component during the unloaded operating condition.

Conveniently, the present invention is a load insensitive power supply and includes an output circuit normally connected to a load for receiving power from the power supply and an input circuit for connection across an AC power supply source which alternately has first and second 180° half-cycles of operation. A transformer is provided having a primary winding connected across the input circuit and first and second series connected secondary windings having a common junction. A filter choke is connected in series between the junction and the output circuit. A first bi-directional switching means serves, when ON, to connect the filter choke and the first secondary winding in a first series circuit with the output circuit permitting bi-directional current flow therethrough. A second bi-directional switching means serves, when ON, to connect the filter choke with the second secondary winding in a second series circuit with the output circuit for bi-directional current flow therethrough. Control is achieved so that one switching means is turned ON when the other switching means is turned OFF during alternate half-cycles of operation. This permits bi-directional current flow through each of the first and second series circuits independently of variations in the magnitude of the load.

The present invention includes a load insensitive power supply comprising an output circuit normally connected to a load for receiving power from the power supply;
an input circuit for connection across an AC power supply source alternately having first and second 180° half-cycles of operation;
a transformer having a primary winding connected across said input circuit and first and second series connected secondary windings having a common junction;
a filter choke connected in series between said junction and said output circuit;
first bi-directional switching means for, when ON, connecting said filter choke and said first secondary winding in a first series circuit with said output circuit permitting bi-directional current flow therethrough;
second bi-directional switching means for, when ON, connecting said filter choke and said second secondary winding in a second series circuit with said output circuit permitting bi-directional current flow therethrough; and
means for alternately turning said first switching means ON and said second switching means ON during alternate first and second 180° half-cycles of operation permitting bi-directional current flow through each of said first and second series circuits independently of variations in the magnitude of said load.

The invention will now be described by way of example with references to the accompanying drawings in which:
Figure 1 is a schematic diagram illustration of a known power supply circuit;
Figures 2A and 2B are waveforms of voltage and current with respect to time illustrating the operation of the prior art circuit of Figure 1;
Figure 3 is a schematic diagram illustrating an embodiment of the present invention;
Figures 4A and 4B are graphical illustrations of the operation in accordance with the embodiment of the invention illustrated in Figure 3;
Figure 5 is a schematic illustration of a second embodiment of the invention; and
Figure 6 is a schematic illustration of a third embodiment of the invention.

Figure 1 illustrates a known power supply circuit and Figures 2A and 2B present waveforms illustrating the operation of the circuit shown in Figure 1. Figure 1 illustrates a choke-input-filtered rectifier power supply 10 which includes a transformer 12 having a primary winding 14 connected across an AC voltage supply source 16. Such a supply source has alternate first and second 180° half-cycles of operation. The transformer 12 includes a pair of secondary windings 18 and 20 having a common or center-tap junction 22. The upper end 24 of winding 18 is connected to ground by way of a diode rectifier 26 oriented as shown. Similarly, the lower end 28 of winding 20 is connected to ground by way of a diode rectifier 30 oriented as shown in the drawings. The center-tap junction 22 is connected by way of a filter choke 40 to an output circuit 42. The output circuit 42 is connected to a variable load 44 illustrated as a variable resistance herein. The filter choke 40 includes a choke coil 46 and a capacitor 48.

The operation of the power supply 10 during normal operation is illustrated in Figure 2A. The voltage between ground and the center-tap 22 is illustrated as the pulsating voltage V_{ct}. A current going through the choke coil 46 is illustrated as current I_{c}. The average DC output voltage V₀ across he load 44 is illustrated by the dotted horizontal line.

If the load is varied so as to become very light, then the output voltage V₀' will soar to a value approximately 40 percent above that of voltage V₀. This is illustrated in Figure 2B. The current I_{c}' flowing through the choke coil is also illustrated in Figure 2B. This increase in the output voltage V₀ to voltage V₀' upon a reduction in load is unwanted because it creates additional stress on the electrical components served by the power supply. This occurs because the AC ripple current in the filter choke 40 is a function of the AC ripple voltage applied to it, and is independent of load current. As the current drawn by the load is reduced, there reaches a point at which the choke current seeks to flow in the reverse direction. The rectifier components become back-biased, preventing the current flow. As the load current approaches zero, the angle of conduction of the rectifiers diminishes from 180° to near 0°, and the rectifiers become essentially peak-detecting.

If the angle of conduction of the rectifiers 26 and 30 could be maintained at a full 180° regardless of the output load current, then the output voltage of the power supply could be held roughly constant. This would eliminate the tendency of the power supply voltage to soar in unloaded conditions. Since in the unloaded condition, the filter choke 40 has no net DC component, then whatever rectifier devices are employed in an improved circuit would need to be bi-directionally conducting during each 180° cycle of conduction.

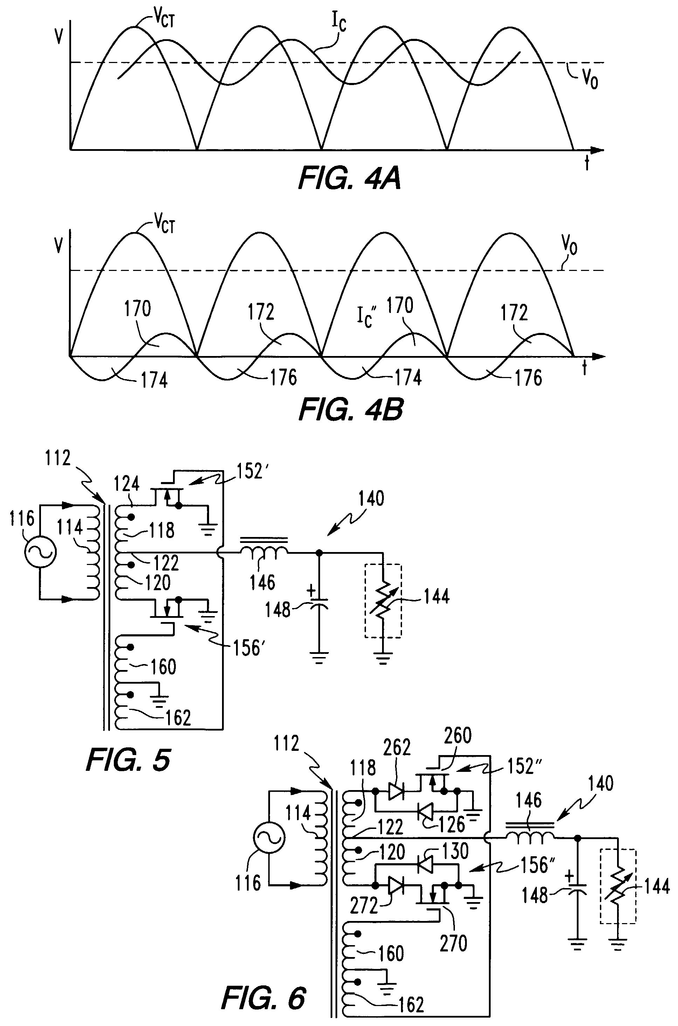

Figure 3 illustrates an embodiment of the present invention. The power supply 100 includes a transformer 112 having a primary winding 114 connected across an AC voltage source 116. The transformer also includes primary windings 118 and 120 having a common junction 122 with the windings being wound as indicated by the dots. The upper end 124 of winding 118 is connected to ground by way of a diode rectifier 126. Similarly, the lower end 128 of winding 120 is connected to ground by means of a diode rectifier 130. The junction 122 is connected to a filter choke 140 and thence to an output circuit 142 connected to a variable load 144. The filter choke includes a choke coil 146 and a capacitor 148. The circuit described thus far corresponds essentially with that as shown in the prior art of Figure 1. The operation of the circuit described thus far in Figure 3 is illustrated in Figure 4A which corresponds essentially with that in Figure 2A.

The diode rectifier 126 together with a silicon-controlled rectifier (SCR) 150 serve as a first bi-directional switch 152. Similarly, the diode rectifier 130 and a silicon-controlled rectifier (SCR) 154 serve as a second bi-directional switch 156. When the first bi-directional switch 152 is turned ON, it operates for 180° to permit bi-directional current flow. The forward choke current flows through the diode rectifier 126 whereas the reverse current flow flows through the SCR 150. When the second bi-directional switch 156 is turned ON, the forward current flow is through diode rectifier 130 and the reverse current flow is through SCR 154.

A switch control is provided for alternately turning ON the first switching means 152 and then the second switching means 156 to achieve bi-directional flow during their respective half cycles of ON operation. This is achieved with the use of tertiary windings. The tertiary windings 160 and 162 having a common center-tap and are on transformer 112. These windings are in a direction as indicated by the dots on the figure. The upper end of winding 160 is connected by way of a resistor 164 to the gate of SCR 154 whereas the lower end of winding 162 is connected by way of a resistor 166 to the gate of SCR 150. Thus the SCRs 150 and 154 are driven ON synchronously by tertiary windings on the power supply transformer to cause the SCRs to operate such that when SCR 150 is ON, SCR 154 is OFF and vise versa. This is accomplished in synchronism with the AC voltage waveform.

The operation of Figure 3 for a normal load is essentially that as shown in Figure 4A. However, as the load changes to an unloaded condition, the operation appears as is illustrated in Figure 4B. The output voltage V₀ in this embodiment remains essentially the same as that during normal operation. However, because reverse current is permitted to flow through the choke by way of SCR 150, the choke current I_{c}" appears as is shown in Figure 4B. Thus, the choke current is illustrated as being positive as it flows through the choke coil 146 in a forward direction. This is indicated by positive current pulses 170, 172 as the current flows through rectifier 126 (pulse 170) and then at a later point flows through rectifier 130 (pulse 172). The reverse current flow is through SCR 150 and SCR 154. That is, the negative or reverse current pulses 174 flow through SCR 150 and the negative or reverse current pulses 176 flow through SCR 154.

The choke current has both a DC component and an AC component. The DC component is controlled by the value of the variable load 44 (or 144). The AC component is controlled by the center-tap voltage C_{ct} and the choke. Consequently, the AC component remains essentially constant during this operation.

Figure 5 illustrates another embodiment which is similar to that as illustrated in Figure 3 and consequently like components are identified with like character references. In this embodiment, the bi-directional switches 152' and 156' are each shown as including a single MOSFET transistor (and not a SCR and a diode rectifier). During normal load conditions, the operation of the circuitry shown in Figure 5 is essentially the same as that of the normal operation of the circuitry shown in Figure 3 and is illustrated by the waveform of Figure 4A. During light or unloaded conditions, the operation of the circuitry shown in Figure 5 is essentially that as described hereinabove with reference to Figures 3 and 4B except that both the forward choke current and the reverse choke current flow through the MOSFET transistors 152' and 156'.

Figure 6 illustrates a further embodiment which is also similar to that in Figure 3 and, consequently, like components are identified in both figures with like character references. The embodiment of Figure 6 includes a first bi-directional switch 152" and a second bi-directional switch 156". Switch 152" includes a MOSFET transistor 260 and a diode 262, both as shown. These are substituted for the SCR 150 in Figure 3.

Also, the second bi-directional switch 156" includes a MOSFET transistor 270 and a diode 272. These replace the SCR 154. This embodiment operates quite similar to that of the embodiment illustrated in Figure 3. The diode 262 and the SCR 260 permit reverse current flow during the operation of bi-directional switch 152". Similarly, diode 272 and MOSFET 270 provide reverse current flow during the operation of bi-directional switch 156".

A load insensitive power supply includes an output circuit normally connected to a load for receiving power from the power supply and an input circuit for connection across an AC power supply source alternately having first and second 180° half-cycles of operation. A transformer is provided having a primary winding connected across the input circuit and including first and second series connected secondary windings having a common junction. A filter choke is connected in series between the junction and the output circuit. A first bi-directional switch serves, when ON, to connect the filter choke and the first secondary winding in a first series circuit with the output circuit, permitting bi-directional current flow therethrough. A second bi-directional switch serves, when ON, to connect the filter choke and the second secondary winding in a second series circuit with the output circuit for bi-directional current flow therethrough.

## Claims

1. A load insensitive power supply comprising an output circuit normally connected to a load for receiving power from the power supply;
an input circuit for connection across an AC power supply source alternately having first and second 180° half-cycles of operation;
a transformer having a primary winding connected across said input circuit and first and second series connected secondary windings having a common junction;
a filter choke connected in series between said junction and said output circuit;
first bi-directional switching means for, when ON, connecting said filter choke and said first secondary winding in a first series circuit with said output circuit permitting bi-directional current flow therethrough;
second bi-directional switching means for, when ON, connecting said filter choke and said second secondary winding in a second series circuit with said output circuit permitting bi-directional current flow therethrough; and
means for alternately turning said first switching means ON and said second switching means ON during alternate first and second 180° half-cycles of operation permitting bi-directional current flow through each of said first and second series circuits independently of variations in the magnitude of said load.

2. A power supply as claimed in claim 1 wherein said first bi-directional switching means includes a first gated transistor switching means and said second bi-directional switching means includes a second gated transistor switching means in which control means supplies a TURN-ON gating signal to said first gated transistor switching means and then a second TURN-ON gating signal to said second transistor switching means.

3. A power supply as claimed in claim 2 wherein said control means includes first and second tertiary windings on said transformer.

4. A power supply as claimed in claim 3 wherein said first gated transistor switching means includes a MOSFET transistor and said second gated transistor switching means includes a second MOSFET transistor.

5. A power supply as claimed in claim 3 or 4 including a first diode rectifier connected across said first gated transistor switching means and a second diode rectifier connected across said second gated transistor switching means.

6. A power supply as claimed in claim 5 wherein said first gated transistor switching means is a first silicon controlled rectifier and said second gated transistor switching means is a second silicon controlled rectifier.

7. A power supply as claimed in claim 6 wherein said first diode rectifier is poled in an opposite direction from that of said first silicon controlled rectifier and that said second diode rectifier is poled in a direction opposite from that of said second silicon controlled rectifier.

8. A power supply as claimed in any one of claims 5 to 7 wherein said first transistor switching means is a first MOSFET transistor and said second transistor means is a second MOSFET transistor.

9. A power supply as claimed in claim 8 wherein said first MOSFET transistor is connected in series with a third diode rectifier across said first diode rectifier with said first diode rectifier and said third diode rectifier being poled in opposite directions and a fourth diode rectifier being connected in series with said second MOSFET transistor across said second diode rectifier with said second diode rectifier and said fourth diode rectifier being poled in opposite directions.
